# FASCICULE DE BREVET EUROPEEN

(11) **EP 1 369 632 B1**
(45) Date de publication et mention de la délivrance du brevet: **17.05.2006**
(21) Numéro de dépôt: 03291183.6
(22) Date de dépôt: 20.05.2003
(51) Int. Cl.: F16L 21/06

(54) **Moyens de connexion de deux éléments de conduite**
Verbindungsvorrichtung zur Verbindung von zwei Rohren
Means for the connection of two pipes

(30) Priorité: 07.06.2002 FR 0207057
(43) Date de publication de la demande: 10.12.2003
(73) Titulaire: LEGRIS SA, 35000 Rennes (FR)
(72) Inventeur: Legeai, Patrick, 35133 Javene (FR); Guivar'ch, Olivier, 35650 Le Rheu (FR)
(74) Mandataire: Lavialle, Bruno François Stéphane

(56) Documents cités:
- WO-A-01/81811
- WO-A-98/46926
- CH-A- 405 838
- CH-A- 677 395
- DE-C- 967 249

## Description

La présente invention concerne des moyens de connexion de deux éléments de conduite.

De tels moyens de connexion sont par exemple destinés à être utilisés dans des circuits de fluide sous pression pour raccorder deux éléments de circuit entre eux, tels que des canalisations, ou une canalisation à un organe fonctionnel émetteur ou récepteur de fluide.

### ARRIERE PLAN DE L'INVENTION

On connaît des dispositifs de raccordement de deux canalisations comportant une union formée d'un corps tubulaire ayant deux extrémités par lesquelles une extrémité de chaque canalisation est destinée à être introduite dans l'union. Le dispositif de raccordement comprend également deux manchons vissés chacun sur une extrémité du corps tubulaire pour déformer, entre un épaulement interne du manchon et l'extrémité du corps tubulaire, une rondelle à griffes d'un état de passage libre de la canalisation vers un état de retenue de la canalisation. Le positionnement axial des canalisations dans le corps tubulaire est généralement assuré par l'intermédiaire d'épaulements annulaires agencés dans le corps tubulaire pour former des butées à l'enfoncement des canalisations dans l'union.

Dans une autre réalisation, les moyens de connexion comprennent un manchon divisé en des première et deuxième parties axialement successives pourvues de moyens pour assurer la liaison étanche et démontable de ces parties respectivement à l'extrémité du corps tubulaire et à la canalisation, et une bague amovible de butée pourvue de moyens de son blocage axial sur la canalisation en retrait de l'extrémité de celle-ci pour constituer un épaulement de butée à l'enfoncement de la canalisation dans le corps tubulaire et un épaulement de butée axiale entre la deuxième partie du manchon et la canalisation.

Il existe également des moyens de connexion comprenant un organe tubulaire de liaison des extrémités de conduite qui est constitué par une paire de demi-corps agencée pour être refermée sur au moins une extrémité de conduite. La paire de demi-corps est associée à des moyens pour agripper ladite extrémité de conduite lorsque la paire de demi-corps est refermée sur celle-ci. Les moyens d'agrippement comprennent des dents pour pénétrer dans les extrémités de conduite et/ou des épaulements de butée pour coopérer soit avec des reliefs en creux ménagés sur les extrémités de conduite soit avec des éléments rapportés sur les extrémités de conduite.

Il est également connu, notamment des documents DE-C-967 249,CH-A-405 838, CH-A-677 395, WO-A-01/81811 et WO-A-98/46926, des moyens de connexion du type précédent mais dont les moyens d'agrippement comprennent au moins une saillie externe formée par déformation plastique sur l'extrémité de conduite en une position espacée d'une face terminale de celle-ci, et deux épaulements internes d'au moins un des demi-corps qui sont axialement espacés pour recevoir entre eux la saillie externe. La réalisation de la saillie externe par déformation plastique de l'extrémité de conduite peut être effectuée notamment sur site du fait de sa simplicité et du peu de moyens à mettre en oeuvre, en particulier après que l'extrémité de conduite a été mise à longueur par découpe. La connexion est alors réalisée en engageant latéralement les demi-corps sur l'extrémité de conduite de telle manière que les épaulements internes de la paire de demi-corps encadrent la saillie externe. Dans ce type de dispositifs, la mise en place et le maintien de moyens d'étanchéité efficaces est relativement difficile.

### OBJET DE L'INVENTION

Un but de l'invention est de proposerdes moyens de connexion du type précité comportant des moyens d'une étanchéité fiable et efficace.

### BREVE DESCRIPTION DE L'INVENTION

A cet effet, on prévoit, selon l'invention, des moyens de connexion de deux extrémités de conduite l'une à l'autre, comprenant un organe tubulaire de liaison des extrémités de conduite comportant au moins une paire de demi-corps qui est agencée pour être refermée sur au moins une extrémité de conduite, au moins un des demi-corps comportant deux épaulements interne axialement espacés pour recevoir entre eux une saillie externe formée par déformation plastique sur l'extrémité de conduite en une position espacée d'une face terminale de celle-ci, les moyens comprenant un sous-ensemble d'étanchéité comportant une douille définissant un logement pour recevoir une zone de l'extrémité de conduite adjacente à la face terminale de celle-ci, et un joint annulaire s'étendant en saillie dans une cavité annulaire de ce logement, la cavité annulaire étant délimitée latéralement par un épaulement interne de la douille et une face d'une bague reçue à coulissement dans la douille et dont une face opposée forme une rampe en saillie de la douille pour coopérer avec une surface interne de forme correspondante d'au moins un des demi-corps.

Ceci facilite la manipulation du joint d'étanchéité, le protège durant les manipulations et permet de maintenir le joint d'étanchéité lors du montage en assurant son bon positionnement par rapport à l'extrémité de conduite. Les risques de fuite dus à un mauvais montage de ce joint sont de ce fait limités. Lorsque la paire de demi-corps est refermée sur l'extrémité de conduite, la surface interne du demi-corps pousse la bague qui comprime le joint contre l'épaulement interne de la douille de telle manière qu'il se produit au moins une légère déformation radiale du joint qui améliore le contact de celui-ci avec la surface externe de l'extrémité de conduite.

De préférence, l'épaulement interne de la douille a une forme annulaire concave.

Lorsque le joint est mis en appui de cet épaulement par la bague, la forme précitée de l'épaulement tend à provoquer un déplacement radial du joint d'étanchéité vers l'intérieur pour appliquer le joint contre l'extrémité de conduite.

Selon une caractéristique particulière, les demi-corps s'étendent à cheval sur les deux extrémités de conduite et, de préférence, chaque extrémité de conduite comporte une saillie externe et la paire de demi-corps possède deux épaulements internes pour coopérer avec la saillie externe de chaque extrémité de conduite.

L'organe de liaison est alors formé par la paire de demi-corps. Le nombre de pièces des moyens de raccordement est de ce fait particulièrement réduit.

D'autres caractéristiques particulières et avantages de l'invention ressortiront à la lecture de la description qui suit de modes de réalisation particuliers non limitatifs de l'invention.

### BREVE DESCRIPTION DES DESSINS

Il sera fait référence aux dessins annexés, parmi lesquels :
- la figure 1 est une vue en élévation avec une demi-coupe longitudinale des moyens de connexion conformes à l'invention, en cours de mise en place sur les extrémités de conduite,
- la figure 2 est une vue analogue à celle de la figure 1 des moyens de connexion, une fois les extrémités de conduite raccordées l'une à l'autre,
- la figure 3 est une vue en perspective et en éclatée de ces moyens de connexion au moment de leur mise en place sur des conduites,
- la figure 4 est une vue en perspective d'une paire de demi-corps,

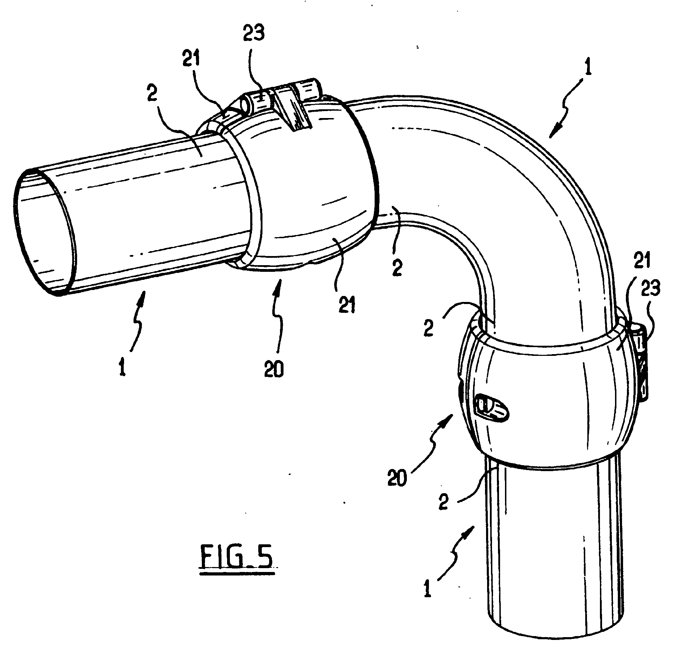

- la figure 5 est une vue analogue à celle de la figure 3 de conduites raccordées par les moyens de connexion de l'invention.

### DESCRIPTION DETAILLEE DE L'INVENTION

En référence aux figures, les moyens de connexion selon l'invention sont destinés à permettre le raccordement bout à bout de deux conduites 1 généralement désignées en 1, métalliques, ayant chacune une extrémité 2 avec une face terminale 3.

Chaque extrémité 2 de conduite 1 comprend une saillie externe 4 de forme annulaire qui est séparée de la face terminale 3 par une zone 5. La saillie externe 4 est réalisée par déformation plastique par exemple au moyen d'un outillage portatif comme une pince ou d'une machine dédiée. L'extrémité 3 de conduite 1 peut également comprendre une saillie externe sous forme par exemple d'un bossage ou alors de plusieurs bossages régulièrement répartis sur la circonférence de l'extrémité de conduite.

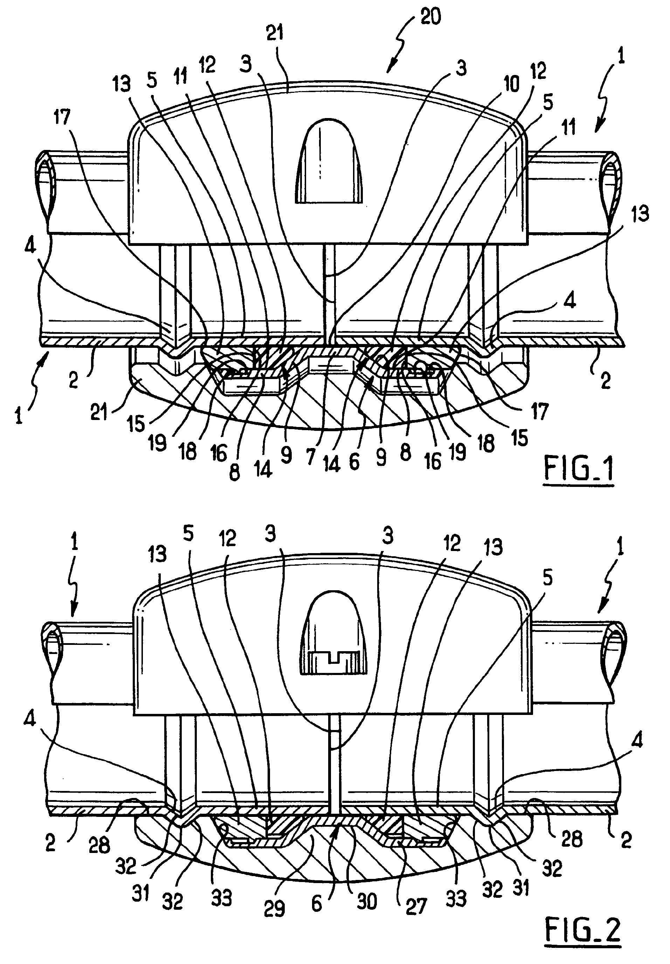

Les moyens de connexion conformes à l'invention comprennent un sous-ensemble d'étanchéité d'une part et un organe tubulaire de liaison des conduites l'une à l'autre d'autre part (concernant les figures 1 et 2, les références de détail du sous-ensemble d'étanchéité et celles de l'organe de liaison ont été indiquées sur les figures 1 et 2 respectivement afin de ne pas surcharger les dessins).

Le sous-ensemble d'étanchéité comprend une douille généralement désignée 6 ayant une section centrale 7 de diamètre interne légèrement supérieur à un diamètre externe de la zone 5 de l'extrémité de conduite et deux sections d'extrémité 8 qui ont un diamètre interne supérieur à celui de la section centrale 7 et qui sont reliées à la section centrale 7 par des parois tronconiques 9.

La section centrale 7 définit ainsi un logement 10 pour une portion de la zone 5 adjacente à la face terminale 3 des extrémités 2 des conduites 1 tandis que les sections d'extrémités 8 délimitent des cavités 11 de réception d'un joint d'étanchéité 12 annulaire et d'une bague 13.

Le joint d'étanchéité 12 a un diamètre interne sensiblement égal au diamètre externe de la zone 5 et un diamètre externe sensiblement égal au diamètre interne de la section d'extrémité 8. Le joint d'étanchéité 12 comprend une face latérale 14 tronconique pour coopérer avec la surface interne de la paroi tronconique 9 et, à l'opposé, une face latérale 15 sensiblement radiale pour coopérer avec la bague 13.

La bague 13 a un diamètre interne sensiblement égal au diamètre externe de la zone 5 et un diamètre externe sensiblement égal au diamètre interne de la section d'extrémité 8. La bague 13 comprend une face latérale 16 sensiblement radiale pour coopérer la face latérale 15 du joint d'étanchéité 12 et, à l'opposé, une face latérale 17 tronconique convexe qui s'étend en saillie à l'extérieur de la douille 6. La bague 13 comporte un redan externe 18 annulaire reçu dans une gorge 19 qui est ménagée dans la cavité 11. La bague 13 est reçue à coulissement dans la cavité 11 entre deux positions qui seront détaillées ultérieurement dans la description et qui sont définies par les flancs de la gorge 19 avec lesquels le redan externe 18 vient en butée. Le redan externe 18 est agencé de manière à permettre un encliquetage de la bague 13 dans la douille 6.

L'organe de liaison est ouvrant et est ici constitué d'une paire généralement désignée en 20 de demi-corps 21 qui possèdent chacun un côté 22 pourvu d'une charnière 23 de liaison au côté 22 correspondant de l'autre demi-corps 21 et un côté opposé 24 pourvu de moyens de sa fixation au côté 24 correspondant de l'autre demi-corps 21. Les moyens de fixation comprennent ici une vis 25 montée sur le côté 24 d'un des demi-corps 21 pour pivoter autour d'un axe transversal à la paire 20 de demi-corps 21 et un taraudage 26 ménagé en correspondance dans le côté 24 de l'autre demi-corps 21 pour recevoir la vis 25.

Chaque demi-corps 21 comporte une cavité centrale 27 de réception du sous-ensemble d'étanchéité et, de part et d'autre de la cavité centrale 27, deux cavités d'extrémité 28 pour recevoir une portion d'une extrémité 2 de conduite 1.

La cavité centrale 27 est pourvue intérieurement d'une collerette 29 en saillie destinée à être reçue dans une gorge 30 de la douille 6.

Chaque cavité d'extrémité 28 comprend une gorge 31 délimitée par deux flancs formant des épaulements 32 et destinée à recevoir la saillie externe 4. Chaque cavité d'extrémité 28 est reliée à la cavité centrale 27 par une surface tronconique 33 concave.

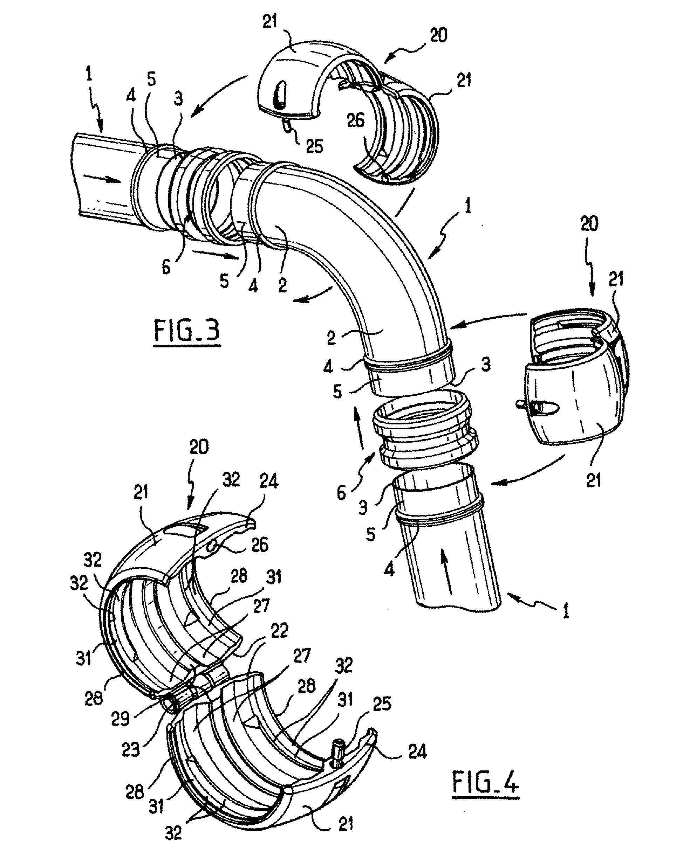

La connexion est réalisée en enfilant les extrémités 2 des conduites 3 dans la douille 6 jusqu'à ce que la portion de la zone 5 adjacente à la face terminale 3 de chaque extrémité 2 soit reçue dans la section centrale 7 de la douille 6 (figure 3).

La paire 20 de demi-corps 21 ouverte est ensuite engagée latéralement sur la douille 6 et les extrémités 2 des conduites 1 de telle manière que les saillies externes 4 se trouvent en regard des gorges 31 des demi-corps et que la collerette 29 se trouve en regard de la gorge 30 de la douille 6 (figure 1).

La paire 20 de demi-corps 21 est ensuite refermée sur les extrémités 2 et la douille 6 et la vis 25 est vissée dans le taraudage 26.

Lors de la fermeture des demi-corps, la collerette 29 en saillie est amenée dans la gorge 30 de la douille 6 pour immobiliser en translation la douille 6 par rapport à la paire 20 de demi-corps 21.

Les surfaces tronconiques 33 viennent coopérer à la manière de cames avec les faces latérales 17 des bagues 13 dans leur position écartée des parois tronconiques 9 (figure 1) pour amener les bagues 13 dans leur position rapprochée des parois tronconiques 9 (figure 2). Les bagues 13 poussent alors les joints d'étanchéité 12 vers les parois tronconiques 9 de telle sorte que, d'une part, les joints d'étanchéité 12 sont comprimés et se déforment radialement et, d'autre part, que les faces latérales 14 coopèrent à la manière de cames avec les parois tronconiques 9 pour déplacer radialement les joints d'étanchéité 12 vers l'intérieur, ce qui applique fortement les joints d'étanchéité 12 contre les zones 5 des extrémités 2 des conduites 1.

Les saillies externes 4 sont reçues dans les gorges 31 et viennent en butée des épaulements 32 qui s'opposent à tout déplacement axial des extrémités de conduites relativement à la paire 20 de demi-corps 21.

La déconnexion est effectuée en réalisant les opérations inverses.

Bien entendu, l'invention n'est pas limitée au mode de réalisation décrit et on peut y apporter des variantes de réalisation sans sortir du cadre de l'invention tel que défini par les revendications.

En particulier, les moyens de connexion peuvent comprendre deux paires de demi-corps pour coopérer chacun avec la saillie externe d'une des extrémités de conduites, et un organe de liaison des deux paires de demi-corps l'une à l'autre, par exemple une bague à section filetée et une bague à section taraudée destinées à être montées sur les paires de demi-corps refermées sur les extrémités de conduite.

Les paires de demi-corps peuvent également être en deux parties reliées par un anneau élastique pour être radialement expansibles de manière à passer les saillies externes. Les demi-corps peuvent également être boulonnés l'un à l'autre sans qu'une charnière ne soit prévue.

La fixation des demi-corps l'un à l'autre peut être assurée par d'autres moyens de fermeture et par exemple plusieurs vis , une goupille...

Les épaulements des demi-corps destinés à coopérer avec les saillies externes peuvent être continus ou interrompus. Un seul des demi-corps peut être pourvus d'épaulements pour coopérer avec les saillies externes.

## Revendications

1. Moyens de connexion de deux extrémités de conduite (2) l'une à l'autre, comprenant un organe tubulaire de liaison des extrémités de conduite comportant au moins une paire (20) de demi-corps (21) qui est agencée pour être refermée sur au moins une extrémité de conduite, au moins un des demi-corps (21) comportant deux épaulements internes (32) axialement espacés pour recevoir entre eux une saillie externe (4) formée par déformation plastique sur l'extrémité de conduite en une position espacée d'une face terminale (3) de celle-ci, **caractérisés en ce qu'**ils comprennent un sous-ensemble d'étanchéité comportant une douille (6) définissant un logement (7) pour recevoir une zone (5) de l'extrémité de conduite (2) adjacente à la face terminale (3) de celle-ci, et un joint annulaire (12) s'étendant en saillie dans une cavité annulaire (8) de ce logement et **en ce que** la cavité annulaire (8) est délimitée latéralement par un épaulement interne (9) de la douille (6) et une face (16) d'une bague (13) reçue à coulissement dans la douille et dont une face opposée (17) forme une rampe en saillie de la douille pour coopérer avec une surface interne (33) de forme correspondante d'au moins un des demi-corps (21).

2. Moyens de connexion selon la revendication 1, **caractérisés en ce que** l'épaulement interne (9) de la douille (6) a une forme annulaire concave.

3. Moyens de connexion selon la revendication 1, **caractérisés en ce que** les demi-corps (21) s'étendent à cheval sur les deux extrémités de conduite (2).

4. Moyens de connexion selon la revendications 3, **caractérisés en ce que** chaque extrémité de conduite (2) comporte une saillie externe (4) et la paire (20) de demi-corps (21) possède deux épaulements internes (32) pour coopérer avec la saillie externe de chaque extrémité de conduite.

5. Moyens de connexion selon l'une quelconque des revendications 1 à 4, **caractérisés en ce que** la saillie externe (4) est de forme annulaire.

6. Moyens de connexion selon l'une quelconque des revendications 1 à 5, **caractérisés en ce que** chaque demi-corps (21) comporte un côté (22) pourvu d'une charnière de liaison (23) au côté correspondant (22) de l'autre demi-corps (21) et un côté opposé (24) pourvu de moyens de sa fixation (25, 26) au côté correspondant (24) de l'autre demi-corps (21).

7. Moyens de connexion selon la revendication 6, **caractérisés en ce que** les moyens de fixation comprennent au moins une vis (25) montée sur le côté du demi-corps (21) concerné pour pivoter autour d'un axe transversal à la paire (20) de demi-corps et au moins un taraudage (26) ménagé en correspondance dans l'autre demi-corps (21).

## Claims

1. Connection means for interconnecting two duct ends (2), the means comprising a tubular connection member for uniting the duct ends, the tubular member comprising at least one pair (20) of half-bodies (21) which is arranged so as to be closed on at least one duct end, at least one of the half-bodies (21) including two inner shoulders (32) that are spaced apart axially so as to receive therebetween an outwardly-directed projection (4) formed by plastic deformation of the duct end in a position set back from an end face (3) of said duct end, the connection means being **characterized in that** they comprise a sealing sub-assembly including a bushing (6) defining a housing (7) for receiving a zone (5) of the duct end (2), which zone is adjacent to the end face (3) of said duct end, and an annular gasket (12) projecting into an annular cavity (8) of said housing, and **in that** the annular cavity (8) is defined laterally by an inner shoulder (9) of the bushing (6) and a face (16) of a ring (13) received to slide in the bushing and having an opposite face (17) that forms a ramp projecting from the bushing so as to co-operate with an inside surface (33) of corresponding shape of at least one of the half-bodies (21).

2. Connection means according to claim 1, **characterized in that** the inner shoulder (9) of the bushing (6) is of annular concave shape.

3. Connection means according to claim 1, **characterized in that** the half-bodies (21) overlap the two duct ends (2).

4. Connection means according to claim 3, **characterized in that** each duct end (2) includes an outwardly-directed projection (4), and the pair (20) of half-bodies (21) has two inner shoulders (32) for co-operating with the outwardly-directed projection of each duct end.

5. Connection means according to any one of claims 1 to 4, **characterized in that** the outwardly-directed projection (4) is of annular shape.

6. Connection means according to any one of claims 1 to 5, **characterized in that** each half-body (21) has one side (22) provided with a connection hinge (23) for connecting to the corresponding side (22) of the other half-body (21), and an opposite side (24) provided with fastener means (25, 26) for fastening it to the corresponding side (24) of the other half-body (21).

7. Connection means according to claim 6, **characterized in that** the fastener means comprise at least one screw (25) mounted on the side of the half-body (21) under consideration so as to turn about an axis that is transverse to the pair (20) of half-bodies, and at least one corresponding tapping (26) formed in the other half-body (21).

## Patentansprüche

1. Mittel zum Verbinden von zwei Leitungsenden (2), umfassend ein rohrförmiges Element zum Verbinden der Leitungsenden, das mindestens ein Paar (20) Gehäusehälften (21) umfasst, das derart ausgebildet ist, dass es mindestens ein Leitungsende umschließen kann, wobei mindestens eine der Gehäusehälften (21) zwei interne Schultern (32) umfasst, die axial beabstandet sind, um zwischen ihnen einen äußeren Vorsprung (4) aufzunehmen, der durch plastisches Verformen auf dem Leitungsende in einer Position gebildet wird, die von einer Endfläche (3) desselben einen Abstand hat, **dadurch gekennzeichnet, dass** sie eine Dichtungseinheit enthalten, umfassend eine Hülse (6), die eine Aufnahme (7) bildet, um einen Abschnitt (5) des Leitungsendes (2) aufzunehmen, der an die Endfläche (3) desselben angrenzt, und einen Dichtring (12), der sich in eine ringförmige Vertiefung (8) dieser Aufnahme hervorstehend erstreckt, und dass die ringförmige Vertiefung (8) seitlich durch eine interne Schulter (9) der Hülse (6) und eine Seitenfläche (16) eines Ringes (13) begrenzt ist, der verschiebbar in der Hülse aufgenommen ist, und dessen entgegengesetzte Seitenfläche (17) eine aus der Hülse hervorstehende Rampe bildet, um mit einer eine entsprechende Form aufweisenden Innenfläche (33) mindestens einer der Gehäusehälften (21) zusammenzuwirken.

2. Verbindungsmittel nach Anspruch 1, **dadurch gekennzeichnet, dass** die interne Schulter (9) der Hülse (6) eine ringförmige konkave Form hat.

3. Verbindungsmittel nach Anspruch 1, **dadurch gekennzeichnet, dass** die Gehäusehälften (21) auf den beiden Leitungsenden (2) sitzen.

4. Verbindungsmittel nach Anspruch 3, **dadurch gekennzeichnet, dass** jedes Leitungsende (2) einen äußeren Vorsprung (4) umfasst, und dass das Paar (20) Gehäusehälften (21) zwei interne Schultern (32) hat, um mit dem äußeren Vorsprung jedes Leitungsendes zusammenzuwirken.

5. Verbindungsmittel nach einem der Ansprüche 1 bis 4, **dadurch gekennzeichnet, dass** der äußere Vorsprung (4) ringförmig ist.

6. Verbindungsmittel nach einem der Ansprüche 1 bis 5, **dadurch gekennzeichnet, dass** jede Gehäusehälfte (21) eine Seite (22) umfasst, die mit einem Scharnier zum Verbinden (23) mit der entsprechenden Seite (22) der anderen Gehäusehälfte (21) versehen ist, sowie eine abgewandte Seite (24), die mit Mitteln (25, 26) versehen ist, um sie an der entsprechenden Seite der anderen Gehäusehälfte (21) zu befestigen.

7. Verbindungsmittel nach Anspruch 6, **dadurch gekennzeichnet, dass** die Befestigungsmittel mindestens eine Schraube (25) umfassen, die derart auf der Seite der betreffenden Gehäusehälfte (21) angeordnet ist, dass sie sich um eine zu dem Paar (20) Gehäusehälften quer verlaufende Achse dreht, sowie mindestens ein Innengewinde (26), das entsprechend in dem anderen Gehäuseteil (21) ausgebildet ist.
